Europäisches Patentamt

(19) European Patent Office

Office européen des brevets

(11) Numéro de publication: **0 141 717**
**B1**

(12) **FASCICULE DE BREVET EUROPÉEN**

(45) Date de publication du fascicule du brevet:
12.08.87

(21) Numéro de dépôt: **84402096.6**

(22) Date de dépôt: **18.10.84**

(51) Int. Cl.⁴: **B 25 J 13/08,** B 23 K 9/02

(54) Dispositif de positionnement pour robot.

(30) Priorité: **20.10.83 FR 8316701**

(43) Date de publication de la demande:
**15.05.85 Bulletin 85/20**

(45) Mention de la délivrance du brevet:
**12.08.87 Bulletin 87/33**

(84) Etats contractants désignés:
**DE GB IT SE**

(56) Documents cité:
**EP-A-0 064 454**
**DE-A-2 922 825**
**GB-A-2 088 095**

**AUTOMATIC WELDING, vol. 26, no. 9, septembre**
**1973, pages 60-62, Cambridge, GB; E.A. GLADKOV**
**et al.: "A device for guiding the electrode around a**
**curvilinear butt joint during arc welding"**

(73) Titulaire: **COMMISSARIAT A L'ENERGIE**
**ATOMIQUE Etablissement de Caractère**
**Scientifique Technique et Industriel, 31/33, rue**
**de la Fédération, F-75015 Paris (FR)**

(72) Inventeur: **Detriche, Jean- Marie, 11, rue de la**
**Tour, F-78360 Montesson (FR)**

(74) Mandataire: **Mongrédien, André, c/o BREVATOME**
**25, rue de Ponthieu, F-75008 Paris (FR)**

## Description

La présente invention se rapporte à un dispositif de positionnement comprenant un porte-outil prévu pour être fixé à l'extrémité d'un robot commandant le déplacement d'un outil selon une trajectoire mémorisée.

Quelle que soit la tâche qu'ils ont à accomplir, la plupart des robots existants ont généralement pour fonction de faire suivre à un outil une trajectoire connue et mémorisée, par exemple lors d'une opération d'apprentissage préalable. A cette fonction principale s'ajoute parfois la nécessité de réaliser, au fur et à mesure du déplacement de l'outil le long de la trajectoire, une correction de la trajectoire suivie par l'outil, pour tenir compte de certaines déformations des pièces, qui résultent le plus souvent de l'action même de l'outil sur ces pièces, ou pour tenir compte d'un mauvais positionnement des pièces; un procédé réalisant cette correction sera appelé autoadaptatif. Les déformations peuvent notamment résulter d'un échauffement des pièces par exemple lorsque le robot assure le soudage de deux pièces, ou d'une déformation mécanique des pièces lorsqu'il s'agit par exemple d'un robot de découpe ou d'ébavurage.

En pratique, le suivi de la trajectoire mémorisée est réalisé par le robot, alors que les corrections de trajectoire sont généralement obtenues en agissant directement sur un porte-outil disposant d'un certain nombre de degrés de liberté et fixé à l'extrémité du robot. La présente invention est indépendante du type de robot utilisé et se rapporte essentiellement au dispositif servant à réaliser les corrections de trajectoire.

Dans l'état actuel de la technique, il existe un certain nombre de dispositifs remplissant cette fonction. Afin d'illustrer les dispositifs existants, on citera notamment la demande de brevet EP-A1-0 034 467 par le Commissariat à l'Energie Atomique. Ce document montre notamment qu'un tel dispositif doit assurer simultanément le supportage de l'outil et d'un système de détection généralement placé en avant de celuici par rapport à la trajectoire à suivre. Quel que soit le principe de détection utilisé (palpeur mécanique, capteur unitaire ou matriciel à courants de Foucault, capteur optique à balayage laser, etc...), le système de détection sert à repérer le décalage de l'outil par rapport à une discontinuité de surface ou à un profil à suivre et, éventuellement, le décalage en hauteur de l'outil par rapport à une surface, afin d'asservir l'outil à corriger sa trajectoire.

Un dispositif de positionnement du même type, bien que de structure plus simple, est décrit dans l'article "A device for guiding the electrode around a curvilinear butt joint during arc welding" de E.A. GLADKOV et al, pages 60-62 de la revue Automatic Welding, volume 26, n°9, septembre 1973 (Cambridge, GB).

Pour tenir compte du décalage existant par construction entre le système de détection et l'outil, les dispositifs de positionnement de ce type se caractérisent par le fait que le système de détection dispose, indépendamment de l'outil, d'un certain nombre de degrés de liberté. Ainsi, les signaux délivrés par le système de détection permettent, par un circuit d'asservissement approprié, de positionner ce système au-dessus de la trajectoire réelle à suivre. Un calcul plus ou moins complexe et approximatif permet alors à partir des signaux émis par le système de détection, de recaler l'outil sur cette trajectoire.

Les dispositifs de positionnement existants de ce type ont donc pour inconvénient de présenter une structure mécanique lourde, complexe, encombrante et coûteuse, (degrés de liberté indépendants pour le système de détection et pour l'outil) associée à une électronique de commande également complexe et coûteuse (calcul prenant en compte un temps de retard lié au décalage outil-système de détection).

La présente invention a précisément pour objet un dispositif de positionnement ne présentant pas les inconvénients des dispositifs connus et remarquable à la fois par une grande simplicité dans sa réalisation mécanique et électronique ainsi que par sa légèreté et son encombrement réduit.

A cet effet et conformément à l'invention, il est proposé un dispositif de positionnement d'un outil comprenant un porte-outil prévu pour être fixé à l'extrémité d'un porteur apte à déplacer cet outil selon une trajectoire mémorisée et à réaliser, à partir de la détection d'une trajectoire réelle à suivre par l'outil, des corrections de trajectoire de l'outil par rapport à la trajectoire mémorisée, le porte-outil supportant un détecteur de position décalé dans le sens du joint par rapport au centre actif de l'outil par l'intermédiaire de moyens pour déplacer ce détecteur dans une direction permettant un calage du détecteur sur la trajectoire réelle, un premier circuit d'asservissement étant associé au détecteur de position et commandant lesdits moyens, ce dispositif étant caractérisé en ce qu'il comprend de plus un détecteur d'orientation, les détecteurs étant fixés rigidement sur l'outil pour former avec ce dernier une tête de travail, lesdits premiers moyens étant des moyens de translation pour déplacer la tête de travail selon une direction orthogonale à un plan passant par les extrémités des détecteurs et par le centre actif de l'outil, des moyens de rotation étant prévus pour faire tourner la tête de travail et les moyens de translation autour d'un axe contenu dans ledit plan et passant par le centre actif de l'outil, un deuxième circuit d'asservissement étant associé au détecteur d'orientation et commandant lesdits moyens de rotation.

Dans cette définition de l'invention, l'expression "centre actif de l'outil" désigne le centre géométrique de la partie de l'outil agissant sur la pièce. Ainsi, lorsque l'outil est une torche de soudage, son centre actif est constitué par l'extrémité de l'électrode, alors que, lorsque l'outil est une meule, son centre actif est le centre de la surface de contact de celle-ci avec la pièce.

Bien que le dispositif selon l'invention ait pour principale fonction d'asservir l'outil à corriger transversalement sa trajectoire, notamment afin de suivre une discontinuité de surface ou un profil, il peut aussi servir à réaliser un asservissement en distance de l'outil par rapport à la surface de la pièce. Dans ce cas, le porte-outil selon l'invention comprend de plus des deuxièmes moyens de translation pour déplacer ledit ensemble parallèlement audit axe.

Selon un mode de réalisation préféré de l'invention, le détecteur d'orientation est constitué par un deuxième détecteur de position décalé dans le sens du joint par rapport au premier détecteur de position. Avantageusement, le détecteur d'orientation D1 est alors placé en avant du détecteur de position D2, en considérant le sens de déplacement de la tête de travail 15 le long de la trajectoire réelle 12.

On décrira maintenant, à titre d'exemple non limitatif, un mode de réalisation préféré de l'invention en se référant aux dessins annexés dans lesquels:

- la figure 1 est une vue en perspective représentant de façon schématique un porte-outil pour procédé autoadaptatif de commande d'outil, réalisé conformément à l'invention,

- la figure 2 illustre schématiquement la réalisation des circuits d'asservissement associés au mécanisme représenté sur la figure 1, et

- la figure 3 illustre les conditions d'utilisation du porte-outil représenté sur les figures 1 et 2 en fonction de la courbure de la trajectoire à suivre.

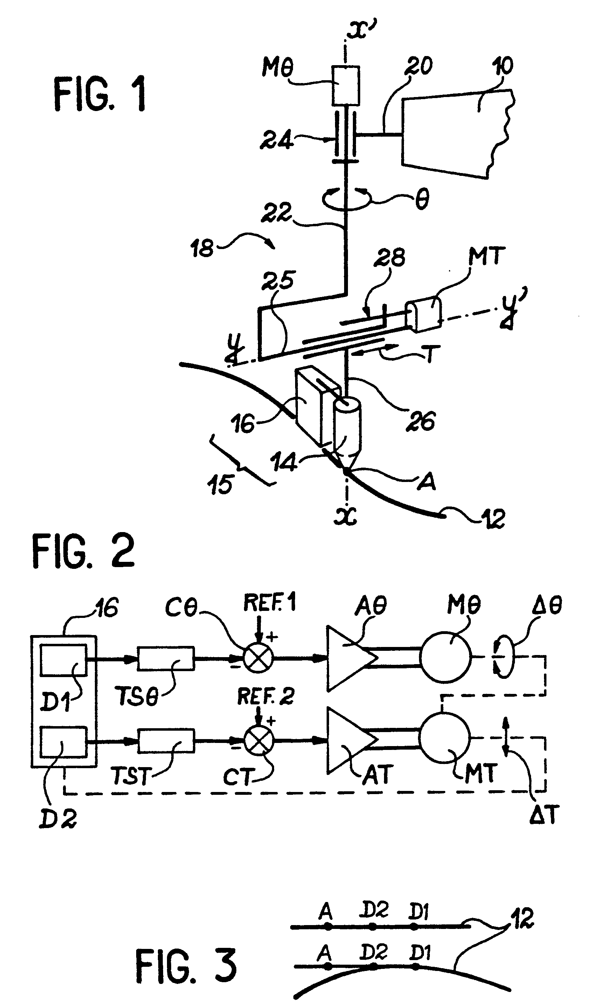

On reconnaît sur la figure 1, l'extrémité 10 d'un robot servant à commander le suivi d'une ligne 12 par un outil 14. La ligne 12 peut notamment être constituée par une discontinuité de surface telle qu'un joint formé entre deux tôles, un profil à suivre, etc...

Il est rappelé que le robot 10 ne fait pas partie de la présente invention et peut être constitué par tout robot connu tel qu'un bras articulé ou qu'un système dans lequel les différents degrés de liberté sont découplés les uns par rapport aux autres.

Sur la figure 1, on a représenté l'outil 14 sous la forme d'une torche de soudage, mais il est clair que l'invention n'est pas limitée à ce type d'outil et peut aussi être utilisée par exemple dans un robot d'encollage de découpe ou d'ébavurage.

Afin de pouvoir détecter à tout instant un écart éventuel entre la ligne 12 que l'outil devrait suivre pour exécuter sa tâche et la trajectoire mémorisée suivie par l'extrémité 10 du robot, et donc par l'outil à défaut de toute correction de trajectoire, il est prévu un système de détection 16. Conformément à l'invention, ce système de détection 16 est fixé rigidement sur l'outil 14 et placé en avant de celui-ci par rapport au sens de déplacement de l'outil le long de sa trajectoire.

Conformément à l'invention, il est rappelé que le système de détection 16 peut être constitué par tout système de détection connu apte à délivrer un signal représentatif d'un écart de positionnement, d'orientation et éventuellement de hauteur par rapport à la ligne à suivre. Dans cet esprit, on peut utiliser tout système de détection connu tel que des palpeurs mécaniques, des capteurs unitaires ou matriciels à courants de Foucault, ou encore des capteurs optiques à balayage laser.

Conformément à l'invention et comme l'illustre plus particulièrement la figure 1, l'ensemble ou tête de travail 15 constitué par l'outil 14 et par le système de détection 16 est monté à l'extrémité du robot 10 par l'intermédiaire d'un porte-outil 18 conférant à cet ensemble deux degrés de liberté. On verra ultérieurement en se référant à la figure 2 que les signaux délivrés par le système de détection 16 sont utilisés pour asservir la tête de travail 15 à suivre la ligne 12 en agissant sur les deux degrés de liberté définis par le porte-outil 18.

Le porte-outil 18 comprend tout d'abord une platine 20 fixée à l'extrémité du robot 10 et supportant à son extrémité un arbre vertical 22, par l'intermédiaire d'une articulation 24 permettant à l'arbre 22 de tourner d'un angle θ autour de son axe propre xx'. L'articulation 24 définit ainsi un premier degré de liberté de rotation θ autour de l'axe xx' pour la tête de travail 15.

Il est à noter que, si l'axe de rotation xx' est vertical sur la figure 1, cela n'est évidemment pas limitatif. En effet, l'orientation de l'axe xx' est essentiellement déterminée par l'orientation de l'extrémité du robot 10, qui dépend elle-même de l'orientation de la surface de la pièce sur laquelle on doit exécuter la tâche. En pratique, l'axe xx' doit seulement être relativement proche de la normale à la surface.

En se reportant à nouveau à la figure 1, on voit que l'arbre 22 est solidaire à son extrémité inférieure d'une tige de guidage 25, de préférence orthogonale à l'axe xx', c'est-à-dire sensiblement horizontale dans le cas de la figure 1. Une platine 26 portant l'outil 14 et le système de détection 16 coulisse le long de la tige 25 par l'intermédiaire de moyens de guidage en translation 28, de façon à définir le deuxième degré de liberté du porte-outil 18. Ce deuxième degré de liberté consiste donc en une translation T selon une direction yy' orthogonale à l'axe xx'. Comme l'illustre la figure 1, il est à noter que la direction yy' de la translation T est orientée de préférence à l'aide du robot 10 et/ou du porte-outil, de telle sorte qu'elle soit sensiblement orthogonale à la partie de la ligne 12 qui se trouve en face de l'outil et du système de détection.

Sur la figure 1, on a représenté la platine 26 dans sa position de référence correspondant au milieu de la course autorisée par les moyens de guidage en translation 28. Dans cette position, on observera que l'axe de rotation xx' passe par le centre actif A de l'outil 14. Lorsque cet outil est constitué par une torche de soudage comme on l'a représenté, le centre actif A est l'extrémité de l'électrode de la torche.

Comme on le voit sur la figure 1, un moteur Mθ est associé à l'articulation 24 afin de commander la rotation autour de l'axe xx' de l'arbre 22 et de l'ensemble des pièces qu'il supporte, par rapport à la platine 20. De façon comparable, un moteur MT est associé aux moyens de guidage 28 afin de commander la translation T de la platine 26 et de la tête de travail 15 qu'elle supporte, dans l'un ou l'autre sens selon la direction yy'.

On a représenté schématiquement sur la figure 2 les circuits d'asservissement servant à commander les moteurs Mθ et MT à partir des signaux délivrés par le système de détection 16. De façon plus précise, la figure 2 se rapporte à un mode de réalisation préféré de l'invention dans lequel le système de détection 16 comprend deux détecteurs de position servant à commander par l'intermédiaire de deux circuits d'asservissement séparés respectivement le moteur Mθ et le moteur MT.

Ainsi, on voit sur la figure 2 que le détecteur 16 se compose d'un premier détecteur D1, placé à l'avant par rapport au déplacement de la tête de travail 15 le long de sa trajectoire et d'un second détecteur D2 placé entre le détecteur D1 et l'outil 14. Comme on le verra ultérieurement, les extrémités des détecteurs D1 et D2 ainsi que le centre actif A de l'outil 14 sont alignés et aussi proches que possible.

Les signaux délivrés par Le détecteur D1 sont transmis à un circuit de traitement associé TSθ qui délivre un signal représentatif du décalage latéral instantané du détecteur D1 par rapport à la ligne 12 autour de l'axe de rotation xx'. Ce signal est comparé dans un additionneur Cθ à un signal de référence REF1 généralement nul, correspondant à la valeur souhaitée de cette position angulaire. Un signal d'erreur est émis par l'additionneur Cθ s'il existe un décalage angulaire entre la position réelle du détecteur D1 et sa position théorique. Ce signal est amplifié dans un amplificateur Aθ, puis transmis au moteur Mθ afin de réaliser la correction ?θ souhaitée de l'orientation θ.

De la même manière, le signal délivré par le détecteur D2 est traité dans un circuit de traitement approprié TST, avant d'être comparé dans un additionneur CT à un signal de référence nul. L'existence d'un décalage dans la direction yy' entre la position réelle du détecteur D2 et sa position théorique sur la ligne 12 conduit à l'émission par l'additionneur CT d'un signal d'erreur servant à commander le moteur MT après qu'il ait été amplifié dans l'amplificateur AT. Une correction de trajectoire ΔT dans le sens de la translation T est ainsi automatiquement réalisèe.

Les traits discontinus sur la figure 2 symbolisent la liaison mécanique existant entre le système de détection 16 et les moteurs Mθ et MT.

Il est à noter que les circuits de traitement TSθ et TST qui sont associés respectivement aux détecteurs D1 et D2 varient selon le type de détecteur utilisé et sont constitués par des circuits bien connus pour chaque type de détecteur. Ils ne seront donc pas décrits ici en détail.

La figure 3 montre dans sa partie supérieure que, lorsque la ligne 12 est rectiligne ou sensiblement rectiligne, le double asservissement réalisé à l'aide du schéma de la figure 2 permet, au cours du soudage, de maintenir les deux détecteurs D1 et D2 en vis-à-vis de la ligne à suivre et, en conséquence, le centre actif A de l'outil également en vis-à-vis de cette ligne puisque A, D1 et D2 sont alignés comme on l'a mentionné précédemment.

Toutefois, la figure 3 fait apparaître dans sa partie inférieure qu'il existe un rayon de courbure limite de la trajectoire 12 à partir duquel l'outil 14 n'est plus positionné avec assez de précision sur celle-ci. Dans la pratique, cette limite est fonction de la distance séparant le centre actif A et les détecteurs D1 et D2 et de la précision requise pour le procédé considéré.

A titre d'exemple, dans un robot de soudage réalisé conformément à l'invention et dans lequel la distance A-D2 serait de 1,5 cm et la distance AD1 de 2,5 cm, il est possible de souder des pièces selon des lignes de soudure ayant des rayons de courbure pouvant aller jusqu'à 10 cm.

On décrira ci-après, un exemple de mise en oeuvre de l'invention, dans le cas où la trajectoire à suivre est mémorisée initialement par un apprentissage.

Au cours d'une opération d'apprentissage destinée à mémoriser la trajectoire à suivre par l'extrémité du robot 10 lors de l'exécution ultérieure de la tâche, la platine 26 supportant la tête de travail 15 est maintenue dans sa position centrale de référence représentée sur la figure 1. Le rotor du moteur Mθ est également maintenu en position de référence. On maintient en permanence l'outil 14 et le système de détection 16 en vis-à-vis de la ligne de discontinuité 12 au moyen du robot 10. Cette orientation angulaire du porte-outil peut être réalisée sans trop de précision car elle est destinée à assurer que le système de détection sera placé dans sa zone de travail lors de l'exécution de la tâche. De plus, elle permet dans certaines applications d'orienter correctement un dispositif associé à l'outil tel qu'un système d'alimentation en métal d'apport dans un robot de soudage.

Lors de l'exécution de la tâche, les deux détecteurs D1 et D2 délivrent des signaux représentatifs après traitement, de l'écart angulaire instantané θ et de l'écart latéral instantané T entre la trajectoire suivie par la tête de travail 15 et la ligne à suivre. Les circuits d'asservissement décrits en se référant à la figure 2 agissent sur les moteurs Mθ et MT pour effectuer les corrections de trajectoire correspondantes.

Lors de l'exécution de la tâche il est également possible de faire une recherche de la ligne à suivre en début de trajet par action sur θ (par le robot 10, ou par le porte-outil), afin de caler le capteur sur le joint.

Bien entendu, l'invention n'est pas limitée au mode de réalisation qui vient d'être décrit à titre d'exemple, mais en couvre toutes les variantes. En particulier, on remarquera qu'il est possible d'adjoindre au porte-outil 18 selon l'invention un troisième degré de liberté permettant de réaliser automatiquement un positionnement en hauteur de l'outil 14. En pratique, ce degré de liberté pourrait être obtenu en réalisant l'arbre 22 ou la platine 26 en deux parties reliées entre elles par des moyens de guidage en translation du type des moyens 28, autorisant un déplacement relatif entre ces deux parties selon une direction parallèle ou sensiblement parallèle à l'axe de pivotement xx'. Le mouvement de translation ainsi permis serait alors commandé par un troisième moteur dont l'asservissement peut être obtenu à l'aide d'un troisième détecteur et d'un troisième circuit d'asservissement du type des deux circuits qui ont été décrits précédemment en se référant à la figure 2.

Par ailleurs, au lieu d'utiliser deux détecteurs de position D1 et D2, on peut utiliser un détecteur de position, et un détecteur d'orientation; ce dernier peut être par exemple un capteur optique sensible à l'image de la ligne à suivre, qui asservit la rotation θ de telle manière que l'axe de translation T soit perpendiculaire à la tangente à la ligne au point de détection, tandis que le détecteur de position asservit la translation T de manière à caler ce dernier sur la ligne.

Enfin, le système de détection peut être disposé en arrière de l'outil et non en avant.

## Revendications

1. Dispositif de postionnement d'un outil (14) comprenant un porte-outil (18) prévu pour être fixé à l'extrémité d'un porteur apte à déplacer cet outil selon une trajectoire mémorisée et à réaliser, à partir de la détection d'une trajectoire réelle (12) à suivre par l'outil, des corrections de trajectoire de l'outil par rapport à la trajectoire mémorisée, le porte-outil (18) supportant un détecteur de position (D2) décalé dans le sens de la trajectoire par rapport au centre actif (A) de l'outil par l'intermédiaire de moyens (MT 28) pour déplacer ce détecteur dans une direction (T) permettant un calage du détecteur (D2) sur la trajectoire réelle (12), un premier circuit d'asservissement (CT) étant associé au détecteur de position (D2) yet commandant lesdits moyens (MT 28), ce dispositif étant caractérisé en ce qu'il comprend de plus un détecteur d'orientation (D1), les détecteurs (D1, D2) étant fixés rigidement sur l'outil (14) pour former avec ce dernier une tête de travail (15), lesdits premiers moyens étant des moyens de translation (MT, 28) pour déplacer la tête de travail (15) selon une direction (YY') orthogonale à un plan passant par les extrémités des détecteurs (D1, D2) et par le centre actif (A) de l'outil, des moyens de rotation (Mθ, 24) étant prévus pour faire tourner la tête de travail (15) et les moyens de translation (MT, 28) autour d'un axe (x, x') contenu dans ledit plan et passant par le centre actif (A) de l'outil, un deuxième circuit d'asservissement (Cθ) étant associé au détecteur d'orientation (D1) et commandant lesdits moyens de rotation (Mθ, 28).

2. Dispositif selon la revendication 1, caractérisé en ce qu'il comprend de plus des deuxièmes moyens de translation pour déplacer la tête de travail (15) parallèlement audit axe (xx').

3. Dispositif selon l'une quelconque des revendications 1 et 2, caractérisé en ce que le détecteur d'orientation est constitué par un deuxième détecteur de position (D1) décalé dans le sens du joint par rapport audit détecteur de position (D2).

4. Dispositif selon la revendication 3, caractérisé en ce que le détecteur d'orientation (D1) est placé en avant du détecteur de position (D2), en considérant le sens de déplacement de la tête de travail (15) le long de la trajectoire réelle (12).

## Patentansprüche

1. Positionierungseinrichtung für ein Werkzeug (14), enthaltend einen Werkzeughalter (18), der zur Befestigung am Ende eines Trägers bestimmt ist, der dazu vorgesehen ist, dieses Werkzeug längs einer gespeicherten Bahn zu verschieben und aufgrund einer von dem Werkzeug zu verfolgenden reellen Bahn (12) Bahnkorrekturen des Werkzeugs gegenüber der gespeicherten Bahn auszuführen, wobei der Werkzeughalter (18) einen Positionsdetektor (D2) enthält, der in Bahnrichtung gegenüber dem Wirkungszentrum (A) des Werkzeugs mittels Einrichtungen (MT 28) zum Verstellen des Detektors in einer Richtung (T) versetzt ist, die eine Verkeilung des Detektors (D2) auf der reellen Bahn (12) ermöglichen, einen ersten Servokreis (CT), der dem Positionsdetektor (D2) zugeordnet ist und der die Einrichtungen (MT 28) steuert, wobei die Einrichtung dadurch gehennzeichnet ist, daß sie darüber hinaus einen Ausrichtungsdetektor (D1) umfaßt, wobei die Detektoren (D1, D2) fest an dem Werkzeug (14) befestigt sind, um mit letzterem einen Arbeitskopf (15) zu bilden, wobei die ersten Einrichtungen Verschiebeeinrichtungen (MT, 28) sind, um den Arbeitskopf (15) in einer Richtung (YY') zu verstellen, die orthogonal zu einer Ebene ist, die durch die Enden der Detektoren (D1, D2) und durch das Wirkungszentrum (A) des Werkzeugs verläuft, Dreheinrichtungen (Mθ, 24) vorgesehen sind, um den Arbeitskopf (15) und die Verschiebeeinrichtung (MT, 28) um eine Achse (x, x') drehen zu lassen, die in der genannten Ebene liegt und durch das Wirkungszentrum (A) des Werkzeugs verläuft und ein zweiter Servokreis (Cθ) dem Ausrichtungsdetektor (D1) zugeordnet ist und die genannten Dreheinrichtungen (Mθ, 28) steuert.

2. Einrichtung nach Anspruch 1, <u>dadurch gekennzeichnet</u>, daß sie darüber hinaus zweite Verschiebeeinrichtungen zum Verschieben des Arbeitskopfes (15) parallel zur genannten Achse (xx') enthält.

3. Einrichtung nach einem der Ansprüche 1 und 2, <u>dadurch gekennzeichnet</u>, daß der Ausrichtungsdetektor von einem zweiten Positionsdetektor (D1) gebildet ist, der in Richtung der Verbindungsstelle gegenüber dem Positionsdetektor (D2) versetzt ist.

4. Einrichtung nach Anspruch 3, <u>dadurch gekennzeichnet</u>, daß der Ausrichtungsdetektor (D1) vor dem Positionsdetektor (D2) angeordnet ist, unter Beachtung der Versatzrichtung des Arbeitskopfes (15) längs der reellen Bahn (12).

## Claims

1. Device for positioning a tool (14), comprising a tool holder (18) intended to be fastened to the end of a carrier designed for moving this tool along a stored path and for making corrections of the tool path relative to the stored path on the basis of the detection of an actual path (12) to be followed by the tool, the tool holder (18) supporting a position detector (D2) shifted in the direction of the path relative to the active centre (A) of the tool by means (MT 28) for moving this detector in a direction (T) allowing the detector (D2) to lock onto the actual path (12), a first control circuit (CT) being associated with the position detector (D2) and controlling the said means (MT 28), this device being characterized in that it also possesses an orientation detector (D1), the detectors (D1, D2) being fastened rigidly to the tool (14), to form with the latter a working head (15), the said first means being translational means (MT 28) for moving the working head (15) in a direction (YY') at right angles to a plane passing through the ends of the detectors (D1, D2) and through the active centre (A) of the tool, rotational means (M , 24) being provided to rotate the working head (15) and the translational means (MT 28) about an axis (x, x') contained in the said plane and passing through the active centre (A) of the tool, and a second control circuit (C8) being associated with the orientation detector (D1) and controlling the said rotational means (M8, 28).

2. Device according to Claim 1, characterized in that it possesses, furthermore, second translational means for moving the working head (15) parallel to the said axis (xx').

3. Device according to either one of Claims 1 and 2, characterized in that the orientation detector consists of a second position detector (D1) shifted in the direction of the joint relative to the said position detector (D2).

4. Device according to Claim 3, characterized in that the orientation detector (D1) is located in front of the position detector (D2), as seen in the direction of movement of the working head (15) along the actual path (12).

0 141 717

FIG. 1

FIG. 2

FIG. 3